# EUROPEAN PATENT APPLICATION

(11) **EP 1 107 536 A1**
(43) Date of publication of application: **13.06.2001**
(21) Application number: 00308857.2
(22) Date of filing: 09.10.2000
(51) Int. Cl.: H04L 29/06, H04Q 7/24

(54) **Mobile radio telecommunications system with improved protocols**

(30) Priority: 10.12.1999 EP 99309978
(71) Applicant: LUCENT TECHNOLOGIES INC., Murray Hill, New Jersey 07974-0636 (US)
(72) Inventor: Costa, Mauro, Casteggio 27045, Pavia (IT); Jarvis, Andre William, Tetbury GL8 8HB (GB); Roberts, Michael, Southend-on-Sea, Essex SS2 5EB (GB)
(74) Representative: Watts, Christopher Malcolm Kelway, Dr.

(57) **Abstract**

In the UMTS or GMS, network components are arranged so that an acknowledgement message 38 or 40 is sent only when the sender 30 sends to the receiver 34 a message 32 having associated with it an instruction 36 to return a negative or positive acknowledgement. Forward compatibility is therefore ensured and updating of the network is made easier.

## Description

This invention relates to a mobile radio telecommunications system, such as the Universal Mobile System or the Global System for Mobile Communications. These and other systems have a large number of component parts or nodes which interwork with each other and across a number of interfaces. Transmissions of information between component parts and nodes and across interfaces are arranged to conform to protocols which are built into the system.

Protocols are made up of procedures. Some procedures are regarded as successful when they are sent, while other procedures require an acknowledgement from the receiver when an action has been completed, or a negative acknowledgement indicating a failure to complete; in current arrangements the receiver is initially programmed to provide the response required by the procedure.

As the technology of protocols develops, protocols which are built into existing systems become obsolete; protocols may reach a dead end; it is then a requirement that nodes in the network are updated to reduce complexity. The result of such updates is that the protocols which each node of the network must implement become more and more complex as evolutions in the network occur.

It is an object of the invention to improve the protocol arrangements in a telecommunications system.

According to the invention, in a mobile radio telecommunications network having at least one interface between first and second components of the network, message exchange across said interface being controlled by a procedure-based protocol, characterized by the network components being arranged so that the sender of a message includes with the message an instruction to provide an acknowledgement when required, and the receiver of the message provides an acknowledgement only when instructed to do so by the sender.

Also according to the invention a component for a mobile radio telecommunications network, the component being arranged to communicate with at least one other network component by a procedure-based protocol, characterized in that when the component sends a message to another network component, it is arranged to include with the message an instruction to provide an acknowledgement when required.

The invention will now be described by way of example only with reference to the accompanying drawings in which :-
Figure 1 illustrates schematically a part of the Universal Mobile Telephone System (UMTS);
Figures 2a, 2b and 2c illustrate an improved protocol arrangement which can operate in three different message sequences.

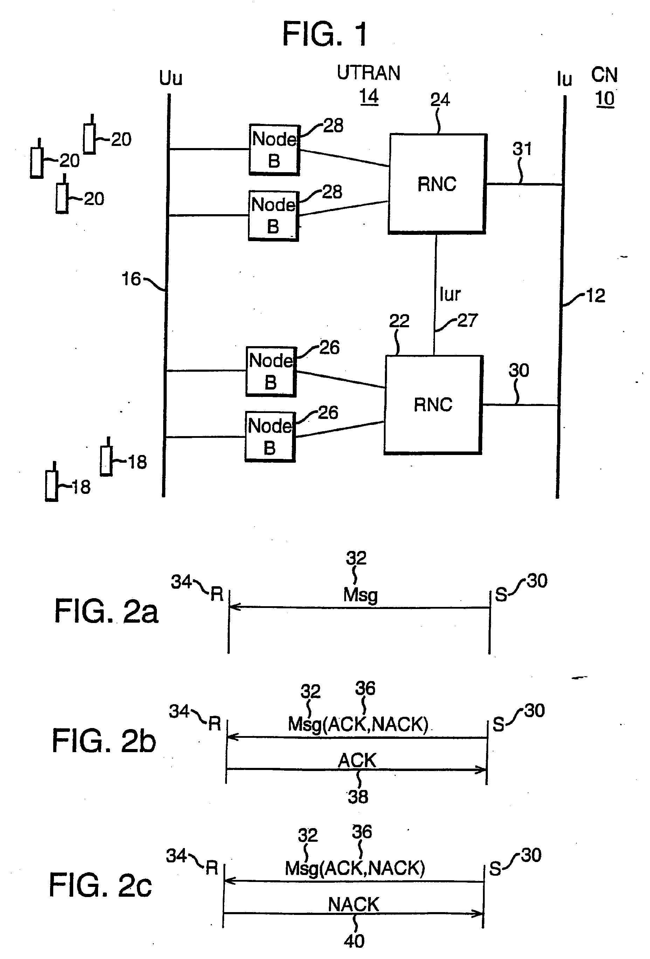

In Figure 1, a Core Network (CN) 10 has an interface 12, the Iu interface, to the UMTS Terrestrial Radio Access Network (UTRAN) 14, and the UTRAN 14 has an interface 16, the Uu interface, to a number of Mobile Systems (MSs) 18, 20.

Within the UTRAN 14 are a number of Radio Network Controllers (RNC) 22, 24, two only being illustrated, each RNC controlling a number of Node Bs 26, 28, two only being shown for each RNC. RNC 22 controls the MSs 18 and RNC 24 controls the MSs 20. The RNCs 22, 24 are connected to each other by an interface Iur 26 and to the Core Network 10 by Iu interfaces 30,31.

In the Figure, the network is the UMTS network; in a GSM network the equivalent building block to an RNC is termed a Base Station Controller (BSC); a Node B is termed a Base Transceiver Station (BTS); and the Uu interface is termed the radio interface.

The RMCs 22, 24 build frames containing data, send the frames to a Node B 26, 28 and control a mobile system as it moves over the ground. A Node B receives frames from an RNC, and modulates the data for passage to the radio interface Uu 16 and thence to a mobile.

The UMTS is arranged to have a control plane and a user plane; the control plane is arranged to control signalling between Node Bs and RNCs, to control the allocation of requests for resources, and to control handover requests. The user plane is responsible for handling the actual data.

Exchange of information between any of the items of hardware shown in Figure 1, i.e., between any of the mobile systems 18, 20 and the Node B 26, 28 with which it is associated across the interface Uu 16; or between any Node B 26 or 28 and the RNC 22, 24 which controls it; or between the CN 10 and either RNC 22 or 24 across the Iu interface 12; or between RNC 22 and RNC 24 across the Iur interface 27, all involve the use of protocols.

In Figure 2a, a message sequence is shown which can be the initial design of the protocol. A sender S30 sends a message Msg 32 to a receiver R 34; the receiver 34 is designed to respond only if instructed to do so by the message; there is no such instruction in the message, so the receiver 34 does not respond.

Suppose now that a new development in the network requires an acknowledgement, which may be positive or negative. Figure 2b shows that the sender 30 sends a message 32 which now has attached to it an instruction 36 to the receiver 34 to respond with a positive or negative acknowledgement. Figure 2b shows that the receiver 34 returns a positive acknowledgement message ACK 38, and Figure 2c shows that the receiver 34 returns a negative acknowledgement message NACK 40.

Thus the sender controls the receiver as far as the response of the receiver is concerned; the sender decides when a procedure requires forward compatibility.

An example of a practical situation could be that initially the sender, such as CN 10 in Figure 1, simply sends an instruction to RNC 24, and does not need a reply, the assumption being that the RNC 24 has responded. In an updated network, the CN 10 needs to know whether the RNC 24 has acted (eg. has the RNC sent a message via Node B 28 to a mobile 20?) before another message (such as the next signalling message for that mobile 20) is sent by the CN. The CN 10 now needs a response from the RNC 24. The protocol in this case controls the procedures crossing the Iu interface 12.

Alternatively the sender could be the RNC 24 or the Node B 28 or a mobile 20.

The CN10, as is conventional, comprises at least one Mobile Swirching Centre (MSC) and a plurality of GSM Support Nodes, one of which will be the Serving GSM Support Node (SGSN) for a call in progress.

Arrangement of protocol procedures in accordance with the invention allows the network to be updated more easily than is possible at present. Testing is made easier because only one protocol needs to be run between two nodes independently of their release dates and implantation in the network. The evolution of protocols for the network is simplified.

## Claims

1. A mobile radio telecommunications network having at least one interface (Iu 12, Iu 16, Iur 27) between first and second components of the network, message exchange across said interface being controlled by a procedure-based protocol, characterised in that the network components are arranged so that the sender (30) of a message (32) includes with the message an instruction (36) to provide an acknowledgement when required, and the receiver (34) of the message provides an acknowledgement (38 or 40) only when instructed to do so by the sender (30).

2. A network according to Claim 1 in which said instruction (36) is an instruction to provide either a positive acknowledgement ACK (38) or a negative acknowledgement NACK (40).

3. A network according to Claim 1 or Claim 2 which is a UMTS network in which said message and said instruction pass across an Iu interface (12) or an Uu interface (16) or an Iur interface (27).

4. A network according to any preceding claim in which said message (32) and said instruction (36) pass between nodes of the network (22, 26 or 24, 28) which lie between network interfaces.

5. A component (30) for a mobile radio telecommunications network, the component being arranged to communicate with at least one other network component by a procedure-based protocol, characterized in that when the component (30) sends a message to another network component (32), it is arranged to include with the message an instruction (36) to provide an acknowledgement when required.

6. A component according to Claim 5 arranged to include with the message an instruction to provide either a positive acknowledgement (ACK 38) or a negative acknowledgement (NACK 40).

7. A component according to Claim 5 or Claim 6 further arranged on receipt of a message with an instruction to provide an acknowledgement when required, to provide said acknowledgment.

8. A component according to any one of claims 5, 6 or 7 which is a mobile telephone (18, 20).

9. A component according to any one of claims 5, 6 or 7 which is a radio network controller (22, 24).

10. A component according to any one of claims 5, 6 or 7 which is a Node B (26, 28).

11. A component according to any one of claims 5, 6 or 7 which is a Mobile Switching Centre for a Core Network (10).

12. A component according to any one of Claims 5, 6 or 7 which is a GSM Support Node for a Core Network (10).
